# EUROPEAN PATENT APPLICATION

(11) **EP 4 643 965 A1**
(43) Date of publication of application: **05.11.2025**
(21) Application number: 23958313.1
(22) Date of filing: 09.11.2023
(51) Int. Cl.: A63F 13/24

(54) **GAME CONTROLLER, GAME CONTROLLER SET AND SYSTEM**

(71) Applicant: Nintendo Co., Ltd., Kyoto-shi, Kyoto 601-8501 (JP)
(72) Inventor: TAKEI, Masaya, Kyoto-shi, Kyoto 601-8501 (JP); JINGUJI, Gagaku, Kyoto-shi, Kyoto 601-8501 (JP)
(74) Representative: Bardehle Pagenberg Partnerschaft mbB Patentanwälte Rechtsanwälte
(86) International application number: PCT/JP2023/040432
(87) International publication number: WO 2025/099912

(57) **Abstract**

A game controller includes a side surface, an upper surface, and a front surface. At the side surface, a first user-operable input portion and a second user-operable input portion are located along a longitudinal direction. At the upper surface, a third user-operable input portion is located. At the front surface, one set of fourth user-operable input portions, a fifth user-operable input portion, a sixth user-operable input portion, and a seventh user-operable input portion are located. The fifth user-operable input portion is located below the one set of fourth user-operable input portions, the fifth user-operable input portion being configured to be operated to input a direction. The sixth user-operable input portion is located below the fifth user-operable input portion, the sixth user-operable input portion being configured to be operated to open a first menu including a plurality of items including a first item causing a device to perform a first function by being selected. The seventh user-operable input portion is located below the sixth user-operable input portion, the seventh user-operable input portion being configured to be operated to perform the first function.

## Description

### TECHNICAL FIELD

The present disclosure relates to a game controller, a game controller set, and a system.

### BACKGROUND ART

Japanese Patent Laying-Open No. 2017-000757 (PTL 1) discloses a game controller.

### CITATION LIST

### PATENT LITERATURE

PTL 1: Japanese Patent Laying-Open No. 2017-000757

### SUMMARY OF INVENTION

### TECHNICAL PROBLEM

An object of the present disclosure is to provide a novel game controller.

### SOLUTION TO PROBLEM

A game controller according to the present disclosure includes a side surface, an upper surface, and a front surface. A first user-operable input portion and a second user-operable input portion are located at the side surface along a longitudinal direction. A third user-operable input portion is located at the upper surface. At the front surface, one set of fourth user-operable input portions, a fifth user-operable input portion, a sixth user-operable input portion, and a seventh user-operable input portion are located. The fifth user-operable input portion is a user-operable input portion located below the one set of fourth user-operable input portions, the fifth user-operable input portion being configured to be operated to input a direction. The sixth user-operable input portion is a user-operable input portion located below the fifth user-operable input portion, the sixth user-operable input portion being configured to be operated to open a first menu, the first menu including a plurality of items including a first item causing a device to perform a first function by being selected. The seventh user-operable input portion is a user-operable input portion located below the sixth user-operable input portion, the seventh user-operable input portion being configured to be operated to perform the first function.

According to the game controller according to the above, an amount of projection of the sixth user-operable input portion from the front surface may be different from an amount of projection of the seventh user-operable input portion from the front surface.

According to the game controller according to the above, the amount of projection of the sixth user-operable input portion from the front surface may be larger than the amount of projection of the seventh user-operable input portion from the front surface.

According to the game controller according to the above, the first user-operable input portion may be located above the second user-operable input portion. The second user-operable input portion, the sixth user-operable input portion, and the seventh user-operable input portion may be located at positions where the second user-operable input portion and the sixth user-operable input portion are superimposed at least in part in an upward-downward direction, and the second user-operable input portion and the seventh user-operable input portion are superimposed at least in part in the upward-downward direction.

According to the game controller according to the above, the sixth user-operable input portion and the seventh user-operable input portion may be different from each other in type of a shape.

According to the game controller according to the above, the first function may be performed by pressing the seventh user-operable input portion while the first menu is shown.

The game controller according to the above may further include a mouse sensor at the side surface.

A game controller set according to the present disclosure includes the game controller described above and a second game controller provided with a second side surface, the second game controller being configured to directly or indirectly be fixed to the game controller such that the second side surface is opposed to the side surface of the game controller. The second game controller includes an eighth user-operable input portion at a position symmetrical to the sixth user-operable input portion, the eighth user-operable input portion being to be operated to perform a second function, and the second game controller does not include a user-operable input portion at a position symmetrical to the seventh user-operable input portion.

According to the game controller set according to the above, the second game controller does not have to include a user-operable input portion to be operated for the device to open the first menu and a user-operable input portion to be operated for the device to perform the first function.

According to the game controller set according to the above, the sixth user-operable input portion and the seventh user-operable input portion may be different from each other in type of a shape. The eighth user-operable input portion and the seventh user-operable input portion may be identical to each other in type of the shape.

According to the game controller set according to the above, an amount of projection of the seventh user-operable input portion from the front surface may be different from an amount of projection of the eighth user-operable input portion from a front surface of the second game controller.

According to the game controller set according to the above, the amount of projection of the seventh user-operable input portion from the front surface may be larger than the amount of projection of the eighth user-operable input portion from the front surface of the second game controller.

A system according to the present disclosure includes the game controller described above and a main body apparatus that communicates with the game controller.

A system according to the present disclosure includes the game controller set described above and a main body apparatus that communicates with the game controller set.

### BRIEF DESCRIPTION OF DRAWINGS

Fig. 1 is a schematic front view showing an exemplary configuration of a system.
Fig. 2 is a schematic front view showing a state in which each of a first game controller and a second game controller has been removed from a main body apparatus.
Fig. 3 is a diagram showing an exemplary state in which the system is operated as being held.
Fig. 4 is a diagram showing an exemplary state in which a controller is operated as being horizontally held.
Fig. 5 is a diagram showing an exemplary state in which the controller is operated as being vertically held.
Fig. 6 is a schematic six-view drawing showing a configuration of a first game controller.
Fig. 7 is an enlarged schematic diagram of an area VII in Fig. 6.
Fig. 8 is a schematic perspective view showing the configuration of the first game controller.
Fig. 9 is a schematic six-view drawing showing a configuration of a second game controller.
Fig. 10 is a schematic front view showing a configuration of a game controller set.
Fig. 11 is an enlarged schematic diagram of an area XI in Fig. 9.
Fig. 12 is an illustrative view showing a first menu.
Fig. 13 is an illustrative view showing a second menu.
Fig. 14 is a schematic front view showing a state in which the first game controller is used as a mouse.
Fig. 15 is a schematic right side view showing a state in which the first game controller is used as the mouse.

### DESCRIPTION OF EMBODIMENTS

An embodiment of the present disclosure (which is also referred to as the present embodiment) will be described in detail with reference to the drawings. The same or corresponding elements in the drawings have the same reference characters allotted and description thereof will not be repeated.

### <System>

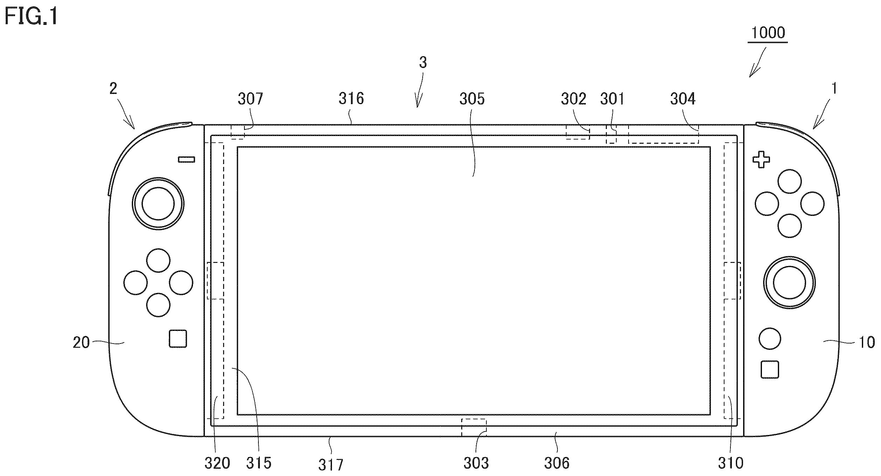

An exemplary configuration of a system 1000 will initially be described. Fig. 1 is a schematic front view showing an exemplary configuration of the system.

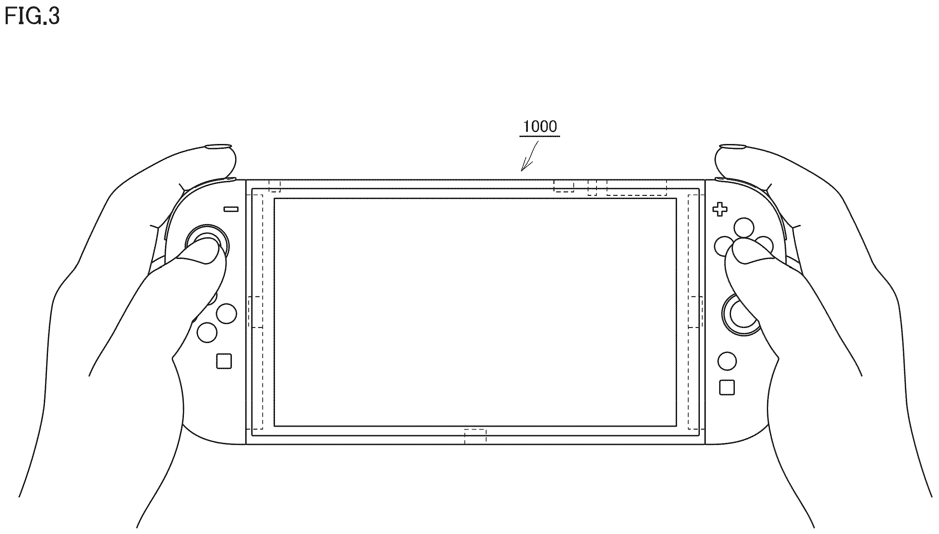

As shown in Fig. 1, system 1000 includes a first game controller 1, a second game controller 2, and a main body apparatus 3. First game controller 1 or second game controller 2 is collectively also simply referred to as a game controller below. Main body apparatus 3 is capable of performing game processing. The game processing is performed based on an input to the game controller. Main body apparatus 3 is a console. First game controller 1 and second game controller 2 are attachable to and removable from main body apparatus 3. In an attached state shown in Fig. 3, first game controller 1 is attached to a right side surface of main body apparatus 3 and second game controller 2 is attached to a left side surface of main body apparatus 3.

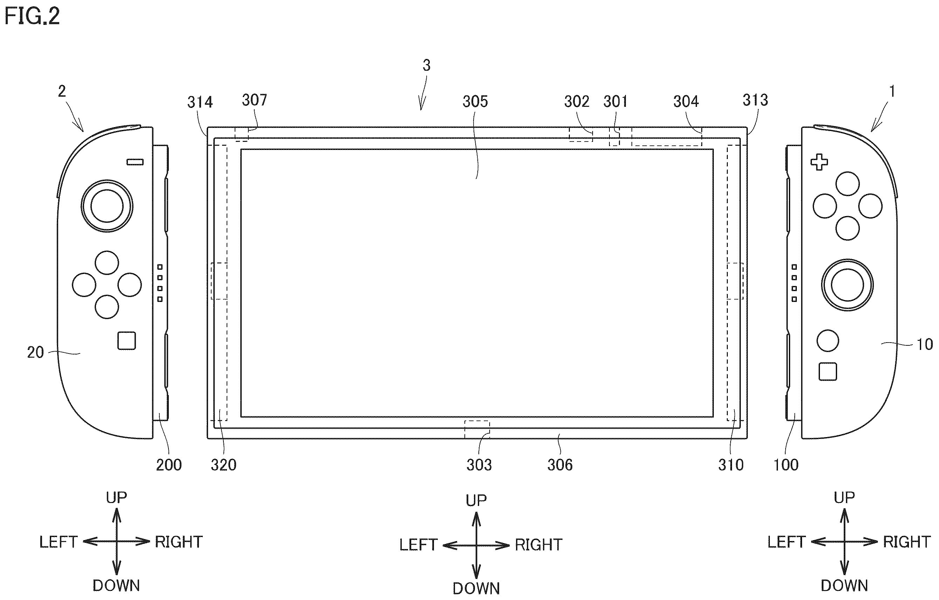

Fig. 2 is a schematic front view showing a state in which each of first game controller 1 and second game controller 2 has been removed from main body apparatus 3.

As shown in Figs. 3, 4, and 5, the game controller can be used in each of a state in which the game controller is attached to main body apparatus 3 and a state in which the game controller is not attached to main body apparatus 3. First game controller 1 and second game controller 2 can communicate with main body apparatus 3.

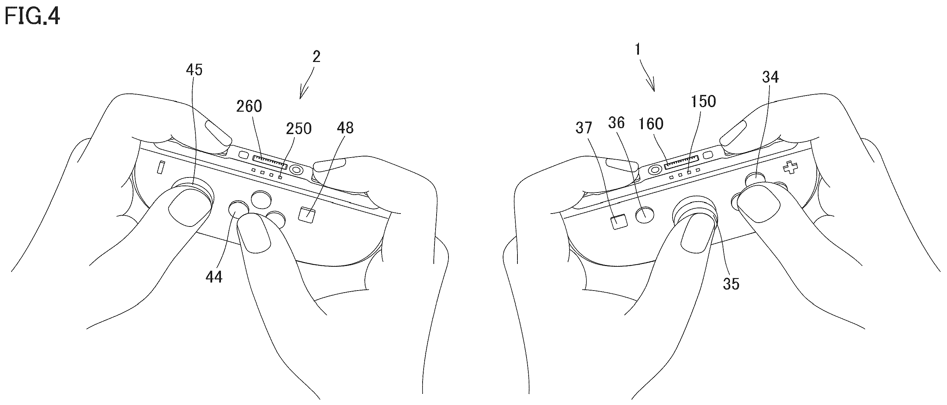

As shown in Fig. 3, while the game controller is attached to main body apparatus 3, the game controller is used in such a manner that a longitudinal direction thereof extends, for example, in an upward-downward direction. As shown in Fig. 4, on the other hand, while the game controller is not attached to main body apparatus 3, the game controller is used in such a manner that the longitudinal direction thereof extends in a left-right direction (from another point of view, a direction in parallel to the ground).

In the example shown in Fig. 4, different users operate first game controller 1 and second game controller 2, respectively.

When directions of main body apparatus 3 and directions of system 1000 in which the game controller is attached to main body apparatus 3 are mentioned in the description hereafter, description will be given, with a state of use in which a direction of connection between side surfaces of main body apparatus 3 to which the game controllers are attached extends in the left-right direction being defined as the reference.

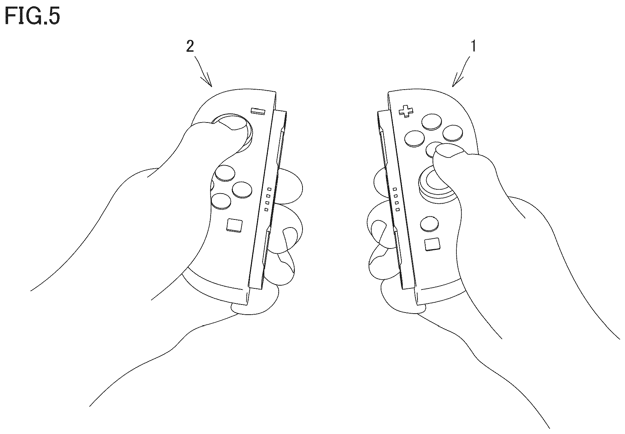

As shown in Fig. 5, while the game controller is not attached to main body apparatus 3, the game controller is used also in such a manner that the longitudinal direction thereof extends, for example, in the upward-downward direction (from another point of view, a direction perpendicular to the ground). In the example shown in Fig. 5, a single user operates both of first game controller 1 and second game controller 2. Different users may operate respective game controllers.

In the following, the state of use shown in Fig. 3 is also called an integrally held state, the state of use shown in Fig. 4 is also called a horizontally held state, and the state of use shown in Fig. 5 is also called a vertically held state.

As shown in Fig. 2, first game controller 1 includes a projection 100. Projection 100 is attached to a controller housing 10. Similarly, second game controller 2 includes a projection 200. Projection 200 is attached to a controller housing 20.

As shown in Figs. 1 and 2, main body apparatus 3 is provided with a main-body-apparatus-side recess 310 in a main body right side surface 313. Main-body-apparatus-side recess 310 extends in the longitudinal direction of main body right side surface 313. Main-body-apparatus-side recess 310 extends along the upward-downward direction of main body right side surface 313. A main body left side surface 314 of main body apparatus 3 is provided with a main-body-apparatus-side recess 320. Main-body-apparatus-side recess 320 extends in the longitudinal direction of main body left side surface 314. Main-body-apparatus-side recess 320 extends along the upward-downward direction of main body left side surface 314 of main body apparatus 3. Main-body-apparatus-side recess 310, 320 is a recess in an elongated shape that extends along the longitudinal direction of main body right side surface 313 or main body left side surface 314.

Main-body-apparatus-side recesses 310 and 320 are each a system attachment portion provided in main body apparatus 3 of system 1000. As shown in Fig. 1, first game controller 1 is attached to main body apparatus 3 such that projection 100 is matched with main-body-apparatus-side recess 310. First game controller 1 is attached to main body apparatus 3 such that a top surface of projection 100 of first game controller 1 is opposed to main body right side surface 313 of main body apparatus 3 and the longitudinal direction of the top surface of projection 100 of first game controller 1 extends along the longitudinal direction of main body right side surface 313 of main body apparatus 3. Similarly, second game controller 2 is attached to main body apparatus 3 such that projection 200 is matched with main-body-apparatus-side recess 320. Second game controller 2 is attached to main body apparatus 3 such that a top surface of projection 200 of second game controller 2 is opposed to main body left side surface 314 of main body apparatus 3 and the longitudinal direction of the top surface of projection 200 of second game controller 2 extends along the longitudinal direction of main body left side surface 314 of main body apparatus 3.

System 1000 may be able to perform a function other than a game. System 1000 may include a casing where a device capable of executing a game can be accommodated. First game controller 1 and second game controller 2 may be attached to a component other than main body apparatus 3 of system 1000. For example, first game controller 1 and second game controller 2 may be attachable to each other.

### <Main Body Apparatus>

As shown in Fig. 1, a display 305 is provided in a main body front surface 315 of main body apparatus 3. Display 305 may be any display apparatus. A touch panel may be provided on a display surface of display 305.

Main body apparatus 3 includes a lower terminal 303. Lower terminal 303 is located at a main body lower side surface 317 of main body apparatus 3. Lower terminal 303 may be located at a center in the left-right direction, in main body lower side surface 317. Lower terminal 303 is, for example, a terminal for communication with an external apparatus. Lower terminal 303 implements, for example, a universal serial bus (USB) connector. Main body apparatus 3 may externally be supplied with electric power through lower terminal 303. Main body apparatus 3 may output an image to the outside through lower terminal 303. Main body apparatus 3 does not have to include display 305 but can have an image shown only on an external display. When main body apparatus 3 is placed at a cradle from a side of the main body lower side surface, lower terminal 303 may be connected to a terminal of the cradle.

Main body apparatus 3 includes an upper terminal 302 at a main body upper side surface 316. Main body apparatus 3 may include a power button 307, a storage medium slot 304, and/or an audio input and output terminal 301 at main body upper side surface 316. Main body apparatus 3 may perform game processing by executing a game application stored in a storage medium inserted in storage medium slot 304.

### <First Game Controller>

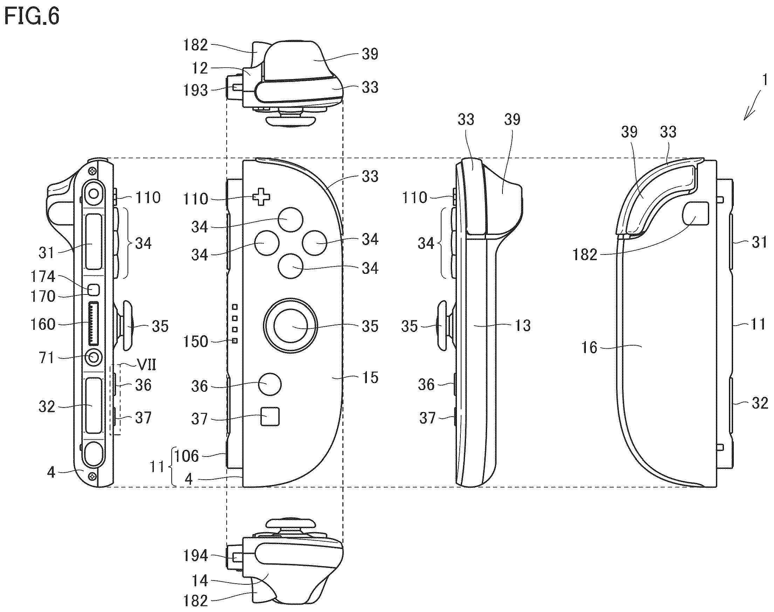

Fig. 6 is a schematic six-view drawing showing a configuration of first game controller 1.

As shown in Fig. 6, first game controller 1 in the present embodiment includes a first user-operable input portion 31, a second user-operable input portion 32, a third user-operable input portion 33, a fourth user-operable input portion 34, a fifth user-operable input portion 35, a sixth user-operable input portion 36, a seventh user-operable input portion 37, a ninth user-operable input portion 39, and a first synchronization button 71. These are exemplary user-operable input portions and first game controller 1 does not have to be provided with all of them. First game controller 1 may include another user-operable input portion such as a touch pad or a pressure sensor instead of or in addition to these user-operable input portions.

While first game controller 1 is attached to main body apparatus 3, input information from the user-operable input portion is transmitted to a main body first terminal 331 of main body apparatus 3 through a first terminal 160 which will be described later and processed in accordance with a program by a CPU of main body apparatus 3. In a manner of use where the game controller is not attached to main body apparatus 3, input information from the user-operable input portion is transmitted to the CPU of main body apparatus 3 through a wireless chip included in the game controller and a wireless chip included in main body apparatus 3. System 1000 does not have to include first terminal 160 and main body first terminal 331, and in that case, information is transmitted through the wireless chips also while the game controller is attached to main body apparatus 3.

As shown in Fig. 6, first game controller 1 includes a front surface 15, a rear surface 16, a first side surface 11, an upper surface 12, a second side surface 13, and a lower surface 14. Front surface 15 is a surface opposed to a user who uses first game controller 1 in the integrally held state, the horizontally held state, and the vertically held state. Rear surface 16 is located opposite to front surface 15. Front surface 15 and rear surface 16 are each contiguous to first side surface 11, upper surface 12, second side surface 13, and lower surface 14.

A direction of normal to first side surface 11 is also referred to as a first direction R1. First direction R1 is a direction in which projection 100 projects and also referred to as a left side, a projection direction, or a left direction. A direction opposite to first direction R1 is also referred to as a third direction R3. Third direction R3 is also referred to as a right side or a right direction. First direction R1 and third direction R3 are also collectively referred to as the left-right direction.

A direction toward a side of upper surface 12 which is perpendicular to the upward-downward direction is also referred to as a second direction R2. Second direction R2 is also referred to as an upper side or an upward direction. A direction opposite to second direction R2 is also referred to as a fourth direction R4. Fourth direction R4 is also referred to as a lower side or a downward direction. Second direction R2 and fourth direction R4 are also collectively referred to as the upward-downward direction.

A direction normal to front surface 15 is also referred to as a fifth direction R5. Fifth direction R5 is also referred to as a front surface side or a front direction. A direction opposite to the fifth direction is also referred to as a sixth direction R6. Sixth direction R6 is also referred to as a rear surface side or a rear direction. Fifth direction R5 and sixth direction R6 are also collectively referred to as a front-rear direction.

In the present embodiment, the longitudinal direction of front surface 15 corresponds to the upward-downward direction of front surface 15. Front surface 15 is substantially in a rectangular shape. An upper corner and a lower corner on the right side of front surface 15 are curved more than an upper corner and a lower corner on the left side.

As described above, first side surface 11 is located at a side of the left direction with respect to the front surface. First side surface 11 is a side surface that extends in the longitudinal direction of front surface 15. First side surface 11 extends in the upward-downward direction. Second side surface 13 is located opposite to first side surface 11. Second side surface 13 is located on a third direction R3 side of first side surface 11. Upper surface 12 is a side surface that is contiguous to an upper end of first side surface 11 and extends in a direction away from first side surface 11. An end of upper surface 12 distant from first side surface 11 is contiguous to an upper end of second side surface 13. Lower surface 14 is a side surface that is contiguous to a lower end of first side surface 11 and extends in a direction away from first side surface 11. An end of lower surface 14 distant from first side surface 11 is contiguous to a lower end of second side surface 13. Upper surface 12 is located on a second direction R2 side of lower surface 14.

As shown in Fig. 6, first side surface 11 of first game controller 1 is provided with first user-operable input portion 31 and second user-operable input portion 32 along the longitudinal direction. Upper surface 12 is provided with third user-operable input portion 33 and ninth user-operable input portion 39. Front surface 15 is provided with a + button 110, one set of fourth user-operable input portions 34, fifth user-operable input portion 35, sixth user-operable input portion 36, and seventh user-operable input portion 37.

In the upward-downward direction, first user-operable input portion 31 and second user-operable input portion 32 are arranged as being aligned. First user-operable input portion 31 is located above second user-operable input portion 32. A top surface of each of first user-operable input portion 31 and second user-operable input portion 32 extends along the upward-downward direction.

First user-operable input portion 31 and second user-operable input portion 32 are each a button on which a user performs a pushing-down operation and they are each a component moved in the right direction by the pushing-down operation. As first user-operable input portion 31 is moved in the right direction by the pushing-down operation by the user, a switch provided inside first game controller 1 is pressed down by first user-operable input portion 31.

Third user-operable input portion 33 is a button to be used, for example, in the integrally held state, and arranged at an upper right portion of first game controller 1 in the integrally held state. Third user-operable input portion 33 may be used also in the vertically held state. Third user-operable input portion 33 includes a curved operation surface. Third user-operable input portion 33 extends in a direction away from first side surface 11. Third user-operable input portion 33 is generally located at a portion of first game controller 1 located at lower right in the horizontally held state. At least a part of third user-operable input portion 33 may be located at upper surface 12. The operation surface of third user-operable input portion 33 is generally curved along the upper right portion of first game controller 1.

Ninth user-operable input portion 39 is a button to be used, for example, in the integrally held state. Ninth user-operable input portion 39 may be used also in the vertically held state. Ninth user-operable input portion 39 is located at the rear of third user-operable input portion 33. Ninth user-operable input portion 39 includes a curved operation surface. Ninth user-operable input portion 39 is generally located at the portion of first game controller 1 located at lower right in the horizontally held state.

One set of fourth user-operable input portions 34 includes, for example, four buttons arranged in a cross shape. Two buttons among the four buttons are arranged as being aligned along the upward-downward direction. Other two buttons among the four buttons are arranged as being aligned along the left-right direction.

In the upward-downward direction, first user-operable input portion 31 and one set of fourth user-operable input portions 34 are located at positions where they are superimposed at least in part. In the upward-downward direction, a part of each of the button located on the upper side and the button located on the lower side among one set of fourth user-operable input portions 34 is located at a position superimposed on first user-operable input portion 31, and two buttons in the middle are located at positions superimposed in their entirety on first user-operable input portion 31.

Fifth user-operable input portion 35 is a user-operable input portion to be operated to input a direction. Fifth user-operable input portion 35 is tiltable in directions around 360 degrees and may be tiltable in any direction including first direction R1 to fourth direction R4. Fifth user-operable input portion 35 may be tiltable only in at least one direction. Fifth user-operable input portion 35 may be pushed in. Fifth user-operable input portion 35 may be slidable in each direction, instead of being tiltable.

Sixth user-operable input portion 36 is a user-operable input portion to be operated to open a first menu 710. Details of first menu 710 will be described later. Sixth user-operable input portion 36 is a button that can be pushed in.

Seventh user-operable input portion 37 is a user-operable input portion to be operated to perform a first function. Details of the first function will be described later. Seventh user-operable input portion 37 is a button that can be pushed in.

In the upward-downward direction, second user-operable input portion 32, and sixth user-operable input portion 36 and seventh user-operable input portion 37 are located at positions where they are superimposed at least in part. In the upward-downward direction, a part of sixth user-operable input portion 36 is located at a position superimposed on second user-operable input portion 32 and seventh user-operable input portion 37 is located at a position superimposed in its entirety on second user-operable input portion 32. In the upward-downward direction, sixth user-operable input portion 36 and seventh user-operable input portion 37 may be located at positions superimposed in their entirety on second user-operable input portion 32.

In the upward-downward direction, + button 110, one set of fourth user-operable input portions 34, fifth user-operable input portion 35, sixth user-operable input portion 36, and seventh user-operable input portion 37 are arranged as being aligned. One set of fourth user-operable input portions 34 is located below + button 110. Fifth user-operable input portion 35 is located below one set of fourth user-operable input portions 34. Sixth user-operable input portion 36 is located below fifth user-operable input portion 35. Seventh user-operable input portion 37 is located below sixth user-operable input portion 36.

In the left-right direction, + button 110 is located at a position superimposed on one button of the one set of fourth user-operable input portions 34. In the left-right direction, fifth user-operable input portion 35 is located at a position superimposed on one set of fourth user-operable input portions 34. In the left-right direction, sixth user-operable input portion 36 is located at a position superimposed on fifth user-operable input portion 35. In the left-right direction, a center of sixth user-operable input portion 36 is located at the left side of a center of fifth user-operable input portion 35. In the left-right direction, seventh user-operable input portion 37 is located at a position superimposed on sixth user-operable input portion 36. In the left-right direction, a center of seventh user-operable input portion 37 is located at a position substantially the same as the center of sixth user-operable input portion 36.

When viewed in the front-rear direction, sixth user-operable input portion 36 and seventh user-operable input portion 37 are different from each other in type of shape. In the present embodiment, the type of the shape of sixth user-operable input portion 36 is circular and the type of the shape of seventh user-operable input portion 37 is quadrangular. The type of the shape of sixth user-operable input portion 36 may be, for example, a triangular shape, a quadrangular shape, a cross shape, a star shape, or the like. The type of the shape of seventh user-operable input portion 37 may be, for example, a circular shape, a triangular shape, a cross shape, a star shape, or the like.

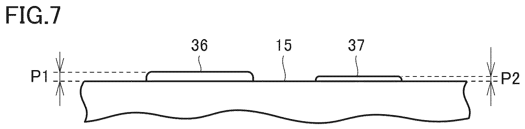

Fig. 7 is an enlarged schematic diagram of an area VII in Fig. 6. As shown in Fig. 7, an amount of projection (a first amount of projection P1) of sixth user-operable input portion 36 from front surface 15 is different from an amount of projection (a second amount of projection P2) of seventh user-operable input portion 37 from front surface 15. Specifically, first amount of projection P1 is larger than second amount of projection P2. First amount of projection P1 is, for example, not smaller than 0.56 mm and not larger than 0.84 mm. Second amount of projection P2 is, for example, not smaller than 0.28 mm and not larger than 0.42 mm. First amount of projection P1 may be at least 1.4 time or at least 1.8 time as large as second amount of projection P2. First amount of projection P1 may be at most three times or at most 2.5 times as large as second amount of projection P2.

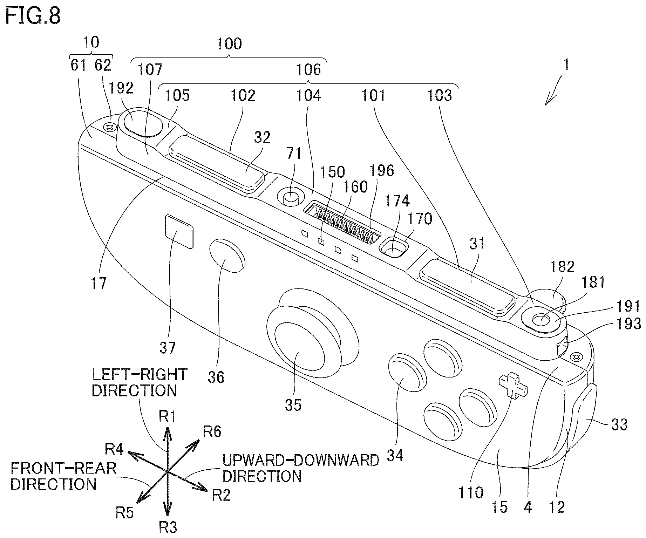

Fig. 8 is a schematic perspective view showing a configuration of first game controller 1.

As shown in Fig. 8, first game controller 1 includes, in addition to already-described features, a mouse sensor 174, a light emission portion 150 that gives a notification of an identification number of the game controller, a first terminal 160 to be connected to main body first terminal 331 of main body apparatus 3, a terminal opening 196, a first mouse skate member 191, a second mouse skate member 192, and a pusher 181 and an operation portion 182 that implement a removal mechanism for removal of projection 100 from main body apparatus 3.

As shown in Fig. 8, projection 100 projects toward the left side from left side surface 4 of controller housing 10. From another point of view, projection 100 projects in first direction R1 from left side surface 4. First side surface 11 includes at least left side surface 4 and projection 100. Projection 100 is a projection in an elongated shape that extends along the longitudinal direction of left side surface 4. Projection 200 of second game controller 2 is also similar in configuration to projection 100. The configuration of projection 100 of first game controller 1 will mainly be described below.

Projection 100 includes a top surface 106 and an outer peripheral surface 107. Outer peripheral surface 107 is located between top surface 106 and left side surface 4 and extends from top surface 106 to left side surface 4. Outer peripheral surface 107 is contiguous to top surface 106 as surrounding an outer edge of top surface 106. Top surface 106 extends along the longitudinal direction of left side surface 4. A length in the upward-downward direction of top surface 106 is longer than a length in the front-rear direction of top surface 106.

A length in the upward-downward direction of projection 100 (that is, the length in the longitudinal direction of projection 100) may be, for example, at least two times or at least five times as long as the length in the front-rear direction of projection 100. The length in the left-right direction of projection 100 may be, for example, at least fifty percent or at least seventy percent as long as the length in the left-right direction of left side surface 4. The length in the upward-downward direction of projection 100 may be, for example, at most twenty-five times or at most fifteen times as long as the length in the front-rear direction of projection 100.

Increase in length in the upward-downward direction of projection 100 can lead to increase in length in the upward-downward direction of top surfaces (operation surfaces) of first user-operable input portion 31 and second user-operable input portion 32 and better operability, for example, in the horizontally held state. Arrangement of first mouse skate member 191, second mouse skate member 192, and the like at top surface 106 of projection 100 can also be facilitated.

As shown in Fig. 8, projection 100 lies between a front-face-side housing 61 and a rear-surface-side housing 62 that form controller housing 10. Left side surface 4 is provided with a housing opening 17 defined by an end surface of front-face-side housing 61 and an end surface of rear-surface-side housing 62. Projection 100 projects through housing opening 17 from the inside of controller housing 10.

As shown in Figs. 6 and 8, outer peripheral surface 107 of projection 100 includes a first engagement hole 193 and a second engagement hole 194. First engagement hole 193 is located in one longitudinal end surface of projection 100. Second engagement hole 194 is located in the other longitudinal end surface of projection 100. First engagement hole 193 is different in shape from second engagement hole 194. In the front-rear direction, first engagement hole 193 may be different in length from second engagement hole 194. In the left-right direction, first engagement hole 193 may be different in length from second engagement hole 194.

Mouse sensor 174 is located at first side surface 11 of first game controller 1. Specifically, mouse sensor 174 is located inside a first opening 170 located in top surface 106 of projection 100. First opening 170 is located between first user-operable input portion 31 and second user-operable input portion 32 in the longitudinal direction of projection 100. More specifically, first opening 170 is located between first user-operable input portion 31 and later-described terminal opening 196 in the longitudinal direction of projection 100. Mouse sensor 174 is arranged inside projection 100. Mouse sensor 174 is, for example, an optical sensor. Mouse sensor 174 includes, for example, a light source (not shown) and a light reception sensor (not shown). Game controller 1 may include in first opening 170, a lens configured to condense light emitted from the light source or light guided to the light reception sensor.

The light source of mouse sensor 174 emits light. Light may be, for example, red light, blue light, or laser beams. A wavelength of light is not particularly limited. Light from the light source irradiates a tracking surface F through first opening 170. The light reception sensor detects reflection by tracking surface F, of light radiated from the light source, reflected light being varied with movement of game controller 1 relative to tracking surface F and introduced through first opening 170. Second game controller 2 which will be described later is also similarly configured.

Terminal opening 196 is provided in top surface 106, between first user-operable input portion 31 and second user-operable input portion 32. First terminal 160 is provided between first user-operable input portion 31 and second user-operable input portion 32 in the longitudinal direction of projection 100. First terminal 160 is provided in projection 100.

First synchronization button 71 is provided at projection 100. First synchronization button 71 is pressed down by the user. First synchronization button 71 is located between first user-operable input portion 31 and second user-operable input portion 32 in the longitudinal direction of projection 100. More specifically, first synchronization button 71 is located between terminal opening 196 and second user-operable input portion 32 in the longitudinal direction of projection 100. First synchronization button 71 may be used for an instruction for setting processing relating to wireless communication between first game controller 1 and main body apparatus 3.

Light emission portion 150 is provided at outer peripheral surface 107 of projection 100. More specifically, light emission portion 150 is provided on the front surface side of outer peripheral surface 107. From another point of view, an area of outer peripheral surface 107 where light emission portion 150 is provided faces the front surface side. When the user views front surface 15 of first game controller 1, the user can visually recognize light from light emission portion 150. Light emission portion 150 typically allows emission of light emitted by an LED to the outside.

Light emission portion 150 can notify the user of prescribed information. Light emission portion 150 may show to the user, information for identification of each game controller when main body apparatus 3 communicates with a plurality of game controllers. Light emission portion 150 may show another type of information to the user. The number of light emission portions 150 is not particularly limited, and for example, four light emission portions 150 are provided. In the present embodiment, four light emission portions 150 are arranged as being aligned in the upward-downward direction. For example, among four light emission portions 150, light emission portion 150 in a portion corresponding to an identification number provided to a game controller may be turned on, or light emission portion(s) 150 in number corresponding to the identification number may be turned on.

Light emission portion 150 is provided between first user-operable input portion 31 and second user-operable input portion 32 in the longitudinal direction of projection 100. Light emission portion 150 is located at a position superimposed on terminal opening 196 in the longitudinal direction of projection 100.

On top surface 106 of projection 100, first mouse skate member 191 and second mouse skate member 192 are placed. A height of each of first mouse skate member 191 and second mouse skate member 192 from top surface 106 is higher than a height of top surface 106 of projection 100 from left side surface 4. From another point of view, first mouse skate member 191 and second mouse skate member 192 raise the height of the top surface of projection 100. In the present embodiment, the top surface of first mouse skate member 191 and the top surface of second mouse skate member 192 form a part of first side surface 11. First mouse skate member 191 and second mouse skate member 192 do not have to be provided.

Game controller 1 may be placed in such a manner that the top surface of projection 100 is opposed to a grounding surface such as a desktop. At this time, first mouse skate member 191 and second mouse skate member 192 themselves come in contact with the grounding surface to suppress direct contact with the grounding surface, of a portion of top surface 106 of projection 100 where a mouse skate is not provided. The top surfaces of first mouse skate member 191 and second mouse skate member 192 come in contact with the game-device-side bottom surface of game-device-side recess 310 while first game controller 1 is attached to main body apparatus 3.

The height of the top surfaces of first mouse skate member 191 and second mouse skate member 192 is equal to or higher than a highest height of top surface 106 of projection 100. From another point of view, the top surfaces of first mouse skate member 191 and second mouse skate member 192 are located leftmost in first game controller 1. First mouse skate member 191 is not particularly limited in shape, and it may be, for example, in any of a circular shape, an elliptical shape, a rectangular shape, and the like. First mouse skate member 191 may be provided with a through hole. First mouse skate member 191 and second mouse skate member 192 may be the same or different in shape.

In the upward-downward direction (in other words, the longitudinal direction of projection 100), first mouse skate member 191 is located on the upper side of first user-operable input portion 31. In the upward-downward direction, first user-operable input portion 31 is located between terminal opening 196 and first mouse skate member 191.

In the upward-downward direction, second mouse skate member 192 is located on the lower side of second user-operable input portion 32. In the upward-downward direction, second user-operable input portion 32 is located between terminal opening 196 and second mouse skate member 192. More specifically, in the upward-downward direction, second user-operable input portion 32 is located between first synchronization button 71 and second mouse skate member 192.

In the upward-downward direction, seventh user-operable input portion 37 is located below mouse sensor 174. In the upward-downward direction, seventh user-operable input portion 37 is located below light emission portion 150. In the upward-downward direction, seventh user-operable input portion 37 is located below terminal opening 196. In the upward-downward direction, seventh user-operable input portion 37 is located above second mouse skate member 192.

As shown in Fig. 8, top surface 106 of projection 100 includes areas different in height from left side surface 4. Top surface 106 of projection 100 includes a first area 101, a second area 102, a third area 103, a fourth area 104, and a fifth area 105.

In first area 101, first user-operable input portion 31 is provided. In second area 102, second user-operable input portion 32 is provided. In third area 103, first mouse skate member 191 is provided. In fourth area 104, terminal opening 196 is provided. In fifth area 105, second mouse skate member 192 is provided.

In the longitudinal direction of projection 100, fourth area 104 is located between first area 101 and second area 102. In the longitudinal direction of projection 100, first area 101 is located between third area 103 and fourth area 104. In the longitudinal direction of projection 100, second area 102 is located between fifth area 105 and fourth area 104. In the longitudinal direction of projection 100, each of first area 101, second area 102, and fourth area 104 is located between third area 103 and fifth area 105.

Fourth area 104 is located at the side of first direction R1 relative to each of first area 101 and second area 102. Third area 103 is located at the side of first direction R1 relative to fourth area 104. Fifth area 105 is located at the side of first direction R1 relative to fourth area 104.

### <Second Game Controller>

The configuration of first game controller 1 is mainly described so far. Second game controller 2 is also similar in basic configuration to first game controller 1. Only overview of second game controller 2 will be described below.

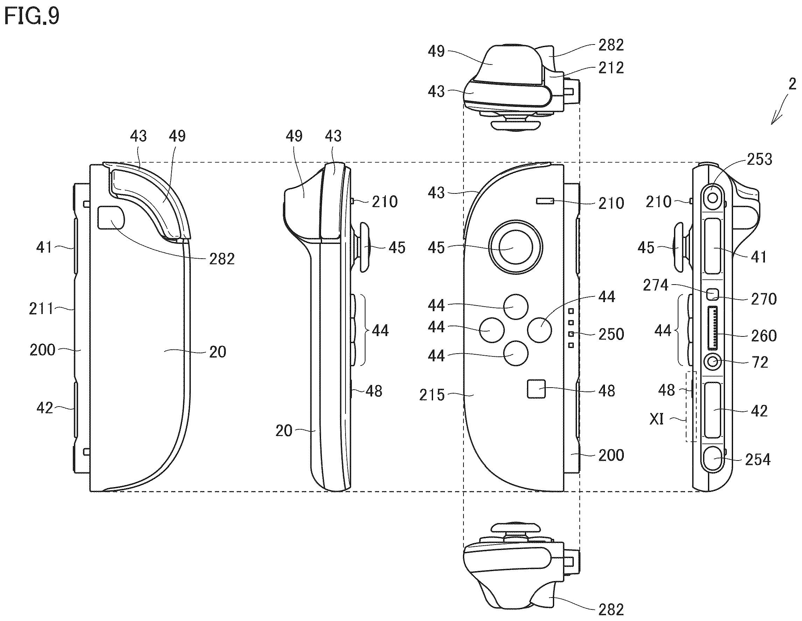

Fig. 9 is a schematic six-view drawing showing a configuration of second game controller 2. As shown in Fig. 9, second game controller 2 includes a first user-operable input portion (left) 41, a second user-operable input portion (left) 42, a third user-operable input portion (left) 43, a fourth user-operable input portion (left) 44, a fifth user-operable input portion (left) 45, an eighth user-operable input portion 48, a - button 210, and a second synchronization button 72.

As shown in Fig. 9, a side surface 211 of second game controller 2 is provided with first user-operable input portion (left) 41 and second user-operable input portion (left) 42 along the longitudinal direction. An upper surface 212 is provided with third user-operable input portion (left) 43 and a ninth user-operable input portion (left) 49. A front surface 215 is provided with - button 210, one set of fourth user-operable input portions (left) 44, fifth user-operable input portion (left) 45, and eighth user-operable input portion 48.

In the upward-downward direction, first user-operable input portion (left) 41 and second user-operable input portion (left) 42 are arranged as being aligned. First user-operable input portion (left) 41 is located above second user-operable input portion (left) 42. In the upward-downward direction, first user-operable input portion (left) 41 and fifth user-operable input portion (left) 45 are located at positions where they are superimposed at least in part. In the upward-downward direction, second user-operable input portion (left) 42 and eighth user-operable input portion 48 are located at positions where they are superimposed at least in part.

In the upward-downward direction, - button 210, one set of fourth user-operable input portions (left) 44, fifth user-operable input portion (left) 45, and eighth user-operable input portion 48 are arranged as being aligned. Fifth user-operable input portion (left) 45 is located below - button 210. One set of fourth user-operable input portions (left) 44 is located below fifth user-operable input portion (left) 45. Eighth user-operable input portion 48 is located below one set of fourth user-operable input portions (left) 44.

Second game controller 2 includes a light emission portion 250, a second terminal 260 connected to a main body second terminal 341 of main body apparatus 3, a mouse sensor opening 270 that guides light to a mouse sensor 274, a third mouse skate member 253, a fourth mouse skate member 254, and an operation portion 282 that implements a removal mechanism for removal of projection 200 from main body apparatus 3. A structure or a function of each feature is substantially the same as that of first game controller 1. At least one of functions may be different.

Positional relation between one set of fourth user-operable input portions 34 and fifth user-operable input portion 35 in first game controller 1 in the horizontally held state is the same as positional relation between one set of fourth user-operable input portions (left) 44 and fifth user-operable input portion (left) 45 in second game controller 2. Specifically, in first game controller 1, fifth user-operable input portion 35 is located at the left side of one set of fourth user-operable input portions 34. Similarly, in second game controller 2, fifth user-operable input portion (left) 45 is located at the left side of one set of fourth user-operable input portions (left) 44. In the horizontally held state, on the other hand, third user-operable input portion 33 and ninth user-operable input portion 39 are located at the right side in first game controller 1, whereas third user-operable input portion (left) 43 and ninth user-operable input portion (left) 49 are located at the left side in second game controller 2. From another point of view, in the integrally held state, fifth user-operable input portion 35 in first game controller 1 is located at the lower side of one set of fourth user-operable input portions 34, whereas fifth user-operable input portion (left) 45 in second game controller 2 is located at the upper side of one set of fourth user-operable input portions (left) 44. In the integrally held state, on the other hand, third user-operable input portion 33 and ninth user-operable input portion 39 of first game controller 1 and third user-operable input portion (left) 43 and ninth user-operable input portion (left) 49 of second game controller 2 are all located at the upper side.

### <Game Controller Set>

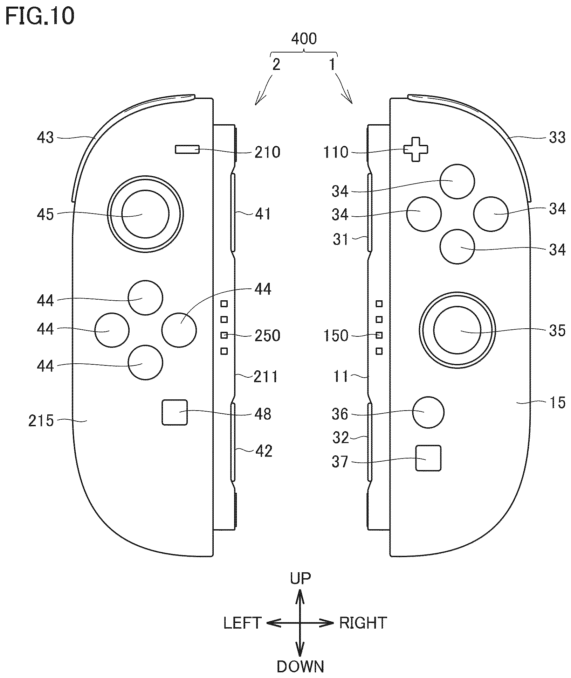

A configuration of a game controller set 400 according to the present embodiment will now be described. Fig. 10 is a schematic front view showing the configuration of game controller set 400. As shown in Fig. 10, game controller set 400 according to the present embodiment includes first game controller 1 and second game controller 2. In Fig. 10, first game controller 1 and second game controller 2 are aligned such that longitudinal directions thereof match and at least lower ends thereof match in the upward-downward direction. As shown in Fig. 10, contours of first game controller 1 and second game controller 2 according to the present embodiment are substantially in line symmetry to each other. Side surface 11 of first game controller 1 and side surface 211 of second game controller 2 opposed to each other may be in parallel to each other or does not have to be in parallel to each other. For example, side surface 11 of first game controller 1 and side surface 211 of second game controller 2 may form a V shape. The contours of first game controller 1 and second game controller 2 do not have to be substantially in line symmetry to each other.

As described above, first game controller 1 and second game controller 2 are indirectly fixed to each other with main body apparatus 3 being interposed. They may indirectly be fixed to each other with another peripheral device being interposed. Alternatively, they may directly be fixed to each other. Game controller set 400 according to the present embodiment communicates with main body apparatus 3.

As shown in Fig. 10, second game controller 2 includes eighth user-operable input portion 48. Eighth user-operable input portion 48 is arranged at a position symmetrical to sixth user-operable input portion 36 with respect to a virtual straight line between first game controller 1 and second game controller 2. In the upward-downward direction, a distance from a center of eighth user-operable input portion 48 to a lower end of front surface 215 is substantially equal to a distance from the center of sixth user-operable input portion 36 to a lower end of front surface 15. In the left-right direction, a distance from the center of eighth user-operable input portion 48 to a right end of front surface 215 may substantially be equal to a distance from the center of sixth user-operable input portion 36 to a left end of front surface 15.

Eighth user-operable input portion 48 performs a second function. The second function is, for example, a capture function. As eighth user-operable input portion 48 is pressed, a screenshot of a screen, moving images, or the like is/are captured. Second game controller 2 does not include a user-operable input portion at a position symmetrical to seventh user-operable input portion 37. Second game controller 2 does not include a user-operable input portion to be operated to open first menu 710. Second game controller 2 does not include a user-operable input portion to be operated to perform the first function.

In game controller set 400 according to the present embodiment, eighth user-operable input portion 48 and seventh user-operable input portion 37 are the same in type of the shape. They may be different in shape of inner areas surrounded by respective contours. For example, a portion around the center of one of seventh user-operable input portion 37 and eighth user-operable input portion 48 may be provided with print, whereas a portion around the center of the other of seventh user-operable input portion 37 and eighth user-operable input portion 48 does not have to be provided with print. The shape of eighth user-operable input portion 48 and the shape of seventh user-operable input portion 37 may be different from each other in size; they may be, for example, similar in shape. In game controller set 400 according to the present embodiment, the type of the shape of eighth user-operable input portion 48 is quadrangular and the type of the shape of seventh user-operable input portion 37 is quadrangular.

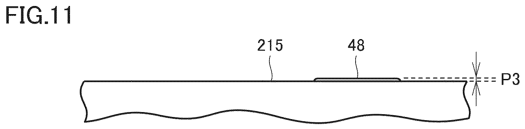

Fig. 11 is an enlarged schematic diagram of an area XI in Fig. 9. As shown in Figs. 11 and 7, the amount of projection (second amount of projection P2) of seventh user-operable input portion 37 from front surface 15 of first game controller 1 is different from an amount of projection (a third amount of projection P3) of eighth user-operable input portion 48 from front surface 215 of second game controller 2. Specifically, second amount of projection P2 is larger than third amount of projection P3. Third amount of projection P3 is, for example, not smaller than 0.20 mm and not larger than 0.30 mm. Second amount of projection P2 may be at least 1.1 time or at least 1.3 time as large as third amount of projection P3. Second amount of projection P2 may be at most two times or at most 1.8 time as large as third amount of projection P3.

### <First Menu>

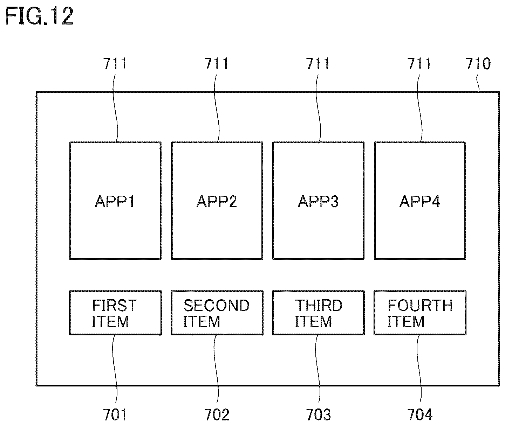

Fig. 12 is an illustrative view showing first menu 710. First menu 710 is, for example, a home menu. As the user operates sixth user-operable input portion 36, first menu 710 opens. First menu 710 includes, for example, a plurality of game app selection portions 711. In first menu 710, the user can select a game app which the user will play, from among the plurality of game app selection portions 711. Main body apparatus 3 opens first menu 710 in response to an operation of sixth user-operable input portion 36 even while a game application is running. At this time, main body apparatus 3 may suspend the game application. Main body apparatus 3 may keep running the game application without suspending the same. Alternatively, main body apparatus 3 may open first menu 710 whenever sixth user-operable input portion 36 is operated, or does not have to open the first menu depending on circumstances.

First menu 710 includes a plurality of items including a first item 701. First menu 710 includes, for example, first item 701, a second item 702, a third item 703, and a fourth item 704. First item 701 is an item to perform the first function by being selected. The first function is a function, for example, to open a second menu 720 for a communication function. The user may use main body apparatus 3 to communicate with a user who uses another main body apparatus. Communication according to the present embodiment includes, for example, a video chat, a voice chat, and a text chat. In communication, a game screen may be used. Second item 702 is an item to perform an eighth function by being selected. The eighth function is, for example, a function to open an album. In the album, screenshots, moving images, or the like taken by the user so far are stored. Third item 703 is an item to perform a third function by being selected. The third function is, for example, a function to access an e-shop. Fourth item 704 is an item to perform a fourth function by being selected. The fourth function is, for example, a function to change setting. The first function, the eighth function, the third function, and the fourth function are different from one another.

### <Second Menu>

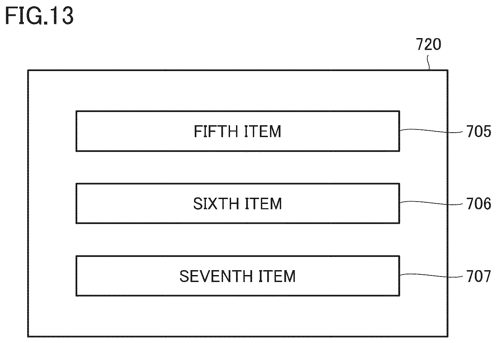

Fig. 13 is an illustrative view showing second menu 720. Second menu 720 is, for example, a menu for communication. As the user operates seventh user-operable input portion 37, second menu 720 opens. Main body apparatus 3 opens second menu 720 in response to an operation of seventh user-operable input portion 37 even while a game application is running. At this time, main body apparatus 3 may open second menu 720 while the main body apparatus keeps running the game application without suspending the game application. Main body apparatus 3 may suspend the game application. Second menu 720 includes, for example, a fifth item 705, a sixth item 706, and a seventh item 707. Fifth item 705 is an item to perform a fifth function by being selected. The fifth function is, for example, a function to open a third menu (not shown). The third menu includes an item to select a user to be invited to a chat. In the third menu, selection of a user to be invited to the chat can be made. Sixth item 706 is an item to perform a sixth function by being selected. The sixth function is, for example, a function to open a fourth menu (not shown). The fourth menu includes an item to select a chat that can be participated in. In the fourth menu, selection of a chat to be participated in can be made. Seventh item 707 is an item to perform a seventh function by being selected. The seventh function is, for example, a function to change setting relating to communication. The fifth function, the sixth function, and the seventh function are different from one another. Main body apparatus 3 may open second menu 720 whenever seventh user-operable input portion 37 is operated, or does not have to open the second menu depending on circumstances. By way of example, when main body apparatus 3 has already been performing a function to communicate with another main body apparatus, main body apparatus 3 may open a menu for changing setting relating to communication which is being executed, in response to an operation of seventh user-operable input portion 37.

### <Method of Performing First Function>

A method of performing the first function will now be described. An example in which the first function is the function to open second menu 720 for communication will be described.

There are two methods of performing the first function. The first method will initially be described. As the user operates sixth user-operable input portion 36, first menu 710 opens. First menu 710 is shown, for example, on the display of main body apparatus 3. First game controller 1 sends a signal indicating pressing down of sixth user-operable input portion 36 to main body apparatus 3. Main body apparatus 3 performs, based on the signal, processing for opening first menu 710 which is processing associated with input of the signal. In other words, main body apparatus 3 calls first menu 710 in response to the operation of sixth user-operable input portion 36.

The user then selects first item 701 to perform the first function from among the plurality of items included in first menu 710. For example, first item 701 may be selected by pressing of the user-operable input portion after a cursor is moved over first item 701, or by touching with a finger, an area on the display where first item 701 is shown. Main body apparatus 3 performs, based on a signal indicating selection of first item 701, the first function which is processing associated with the signal. Specifically, main body apparatus 3 performs processing for opening second menu 720 for communication based on the signal. Second menu 720 is shown, for example, on the display of main body apparatus 3. Second menu 720 is shown instead of first menu 710. Second menu 720 may be superimposed on first menu 710.

The second method will now be described. As the user operates seventh user-operable input portion 37, the first function is directly performed. Specifically, first game controller 1 sends a signal indicating pressing down of seventh user-operable input portion 37 to main body apparatus 3. Main body apparatus 3 performs, based on the signal, processing for opening second menu 720 which is processing associated with input of the signal. In other words, main body apparatus 3 calls second menu 720 in response to the operation of seventh user-operable input portion 37. In another manner, based on pressing down of seventh user-operable input portion 37, first game controller 1 may generate a command "open second menu 720" and send the command to main body apparatus 3.

According to first game controller 1 according to the present embodiment, by providing seventh user-operable input portion 37 to be operated to directly perform the first function, the user can access the first function in a shorter period of time than in an example where the user once operates sixth user-operable input portion 36 to open first menu 710 and then selects an item therein to perform the first function.

While first game controller 1 according to the present embodiment is vertically held (held with third user-operable input portion 33 being located above or in front), third user-operable input portion 33 or ninth user-operable input portion 39 is operated with the right forefinger or the right middle finger, and fourth user-operable input portion 34 and fifth user-operable input portion 35 below the same are operated with the user's right thumb. Since sixth user-operable input portion 36 and seventh user-operable input portion 37 are located below fifth user-operable input portion 35 at this time, a wrong operation of sixth user-operable input portion 36 and seventh user-operable input portion 37 with the right thumb during play of the game or the like is suppressed.

Furthermore, sixth user-operable input portion 36 to be operated to open first menu 710 including the plurality of items including the item to perform the first function to be performed with the use of seventh user-operable input portion 37 may be higher in frequency of use than seventh user-operable input portion 37. Sixth user-operable input portion 36 is located above and closer to fifth user-operable input portion 35 than seventh user-operable input portion 37. Therefore, when sixth user-operable input portion 36 is to be operated, the thumb should only slightly be moved from fifth user-operable input portion 35, which is highly convenient. Seventh user-operable input portion 37 to be operated to perform a specific first function, on the other hand, is arranged at a more distant position. Therefore, when the user intends to perform the first function, the user should extend his/her finger farther to operate the seventh user-operable input portion, and hence possibility of the wrong operation at the time when the user does not intend to perform the first function is suppressed. Even if the user wrongly operates sixth user-operable input portion 36 in an attempt to perform the first function, the user can perform the first function also from first menu 710 and hence the user can reach an aimed function without going back through the process or cancelling the operation.

Furthermore, when first game controller 1 according to the present embodiment is horizontally held, fifth user-operable input portion 35 is operated with the left thumb and fourth user-operable input portion 34 is operated with the right thumb. At this time, sixth user-operable input portion 36 and seventh user-operable input portion 37 are located on the left of fifth user-operable input portion 35. Therefore, the wrong operation is suppressed similarly as described above. Since seventh user-operable input portion 37 is located further on the left as compared with sixth user-operable input portion 36, the wrong operation is suppressed similarly as described above.

According to first game controller 1 according to the present embodiment, the amount of projection of sixth user-operable input portion 36 from the front surface is different from the amount of projection of seventh user-operable input portion 37 from the front surface. Therefore, since sixth user-operable input portion 36 and seventh user-operable input portion 37 are readily identifiable, mix-up between sixth user-operable input portion 36 and seventh user-operable input portion 37 is suppressed.

According to first game controller 1 according to the present embodiment, the amount of projection of sixth user-operable input portion 36 from the front surface is larger than the amount of projection of seventh user-operable input portion 37 from the front surface. Therefore, sixth user-operable input portion 36 is pressed more readily than seventh user-operable input portion 37. Even if sixth user-operable input portion 36 is pressed in desire to perform seventh user-operable input portion 37, the first function can thereafter be performed and hence inconvenience is less.

According to first game controller 1 according to the present embodiment, first user-operable input portion 31 is located above second user-operable input portion 32. In the upward-downward direction, second user-operable input portion 32, and sixth user-operable input portion 36 and seventh user-operable input portion 37 are located at positions where they are superimposed at least in part. When first game controller 1 is horizontally held in such a manner that the left forefinger lies over second user-operable input portion 32, the left thumb tends to be located at a position where it lies over sixth user-operable input portion 36 or seventh user-operable input portion 37. In particular when fifth user-operable input portion 35 is not operated, the first game controller may be held in such a manner than the thumb touches the controller on the left (below in the upward-downward direction) of fifth user-operable input portion 35. Since sixth user-operable input portion 36 projects more than seventh user-operable input portion 37 at this time, the thumb may be located at a position where it touches sixth user-operable input portion 36. Therefore, when the user desires to perform some function, the user can conveniently press down sixth user-operable input portion 36 in that state to make transition to selection of the function. If seventh user-operable input portion 37 projects more than projection of sixth user-operable input portion 36 and a finger is placed on the seventh user-operable input portion, it may not give rise to a problem in desire for a specific function, however, it may lead to a wrong operation in desire for a function other than that.

Furthermore, while first game controller 1 is horizontally held, the thumb extends from a left part of the game controller toward the center substantially abeam and lies over both of sixth user-operable input portion 36 and seventh user-operable input portion 37. When an attempt to press down sixth user-operable input portion 36 is made in this state, such a wrong operation as pressing not only sixth user-operable input portion 36 but also seventh user-operable input portion 37, because of sixth user-operable input portion 36 projecting more than seventh user-operable input portion 37, is suppressed.

According to first game controller 1 according to the present embodiment, sixth user-operable input portion 36 and seventh user-operable input portion 37 are different from each other in type of the shape. Therefore, mix-up between sixth user-operable input portion 36 and seventh user-operable input portion 37 is suppressed.

In first game controller 1 according to the present embodiment, the first function is performed by pressing seventh user-operable input portion 37 while first menu 710 is shown. Even when sixth user-operable input portion 36 is wrongly pressed and when an item is not selected in that case, by directly pressing seventh user-operable input portion 37, the first function can be performed.

Game controller set 400 according to the present embodiment includes first game controller 1 and second game controller 2 to directly or indirectly be fixed to first game controller 1. Second game controller 2 includes at the position symmetrical to sixth user-operable input portion 36, eighth user-operable input portion 48 to be operated to perform the second function, and does not include the user-operable input portion at the position symmetrical to seventh user-operable input portion 37. Therefore, in which of first game controller 1 and second game controller 2 sixth user-operable input portion 36 and seventh user-operable input portion 37 are included is readily distinguished.

According to game controller set 400 according to the present embodiment, second game controller 2 does not include the user-operable input portion to be operated to open first menu 710 and the user-operable input portion to be operated to perform the first function. Necessity to hold first game controller 1 for performing the first function is thus readily understood.

According to game controller set 400 according to the present embodiment, sixth user-operable input portion 36 and seventh user-operable input portion 37 are different from each other in type of the shape. Eighth user-operable input portion 48 and seventh user-operable input portion 37 are identical to each other in type of the shape. When sixth user-operable input portion 36, seventh user-operable input portion 37, and eighth user-operable input portion 48 are all different in shape, confusion may highly be likely. With eighth user-operable input portion 48 and seventh user-operable input portion 37 being identical in type of the shape, whether a user-operable input portion is sixth user-operable input portion 36 or otherwise is clarified.

According to game controller set 400 according to the present embodiment, the amount of projection of seventh user-operable input portion 37 from the front surface of first game controller 1 is different from the amount of projection of eighth user-operable input portion 48 from the front surface of second game controller 2. Therefore, mix-up between eighth user-operable input portion 48 and seventh user-operable input portion 37 is suppressed.

### <Method of Operating Game Controller as Mouse>

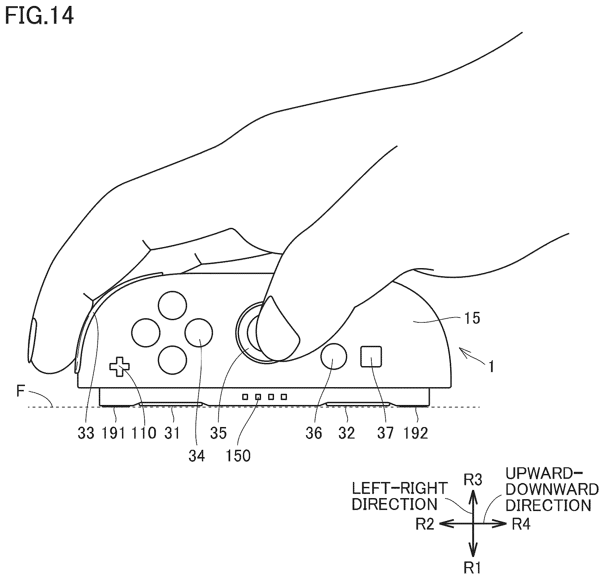

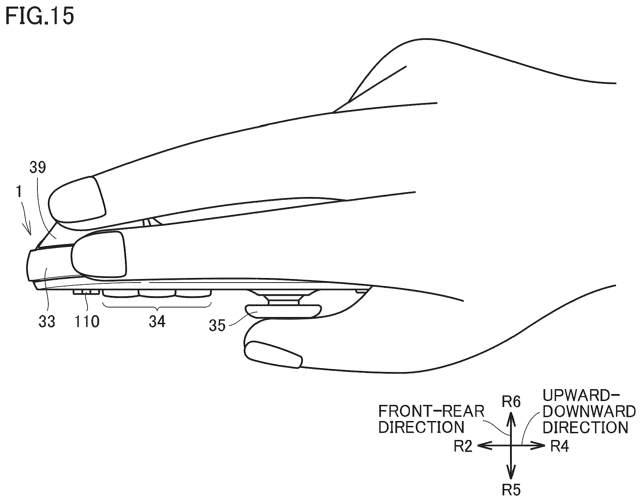

Fig. 14 is a schematic front view showing a state in which first game controller 1 is used as a mouse. Fig. 15 is a schematic right side view showing a state in which first game controller 1 is used as the mouse.

As shown in Figs. 14 and 15, game controller 1 according to the present embodiment can be used also as the mouse while game controller 1 is placed on tracking surface F such that the first opening in which mouse sensor 174 is provided is opposed to tracking surface F. As described above, mouse sensor 174 is provided at first side surface 11 of the game controller.

As shown in Figs. 14 and 15, when game controller 1 according to the present embodiment is used as the mouse, the user's palm is arranged to cover second side surface 13 of first game controller 1. The right thumb of the user is arranged at the side of front surface 15. For example, the right thumb of the user is put along fifth user-operable input portion 35. The right forefinger of the user is arranged on third user-operable input portion 33. The right middle finger of the user is arranged on ninth user-operable input portion 39. At this time, since sixth user-operable input portion 36 and seventh user-operable input portion 37 are located at a side of the user's wrist, a wrong operation can be suppressed. Since seventh user-operable input portion 37 is located below sixth user-operable input portion 36, the wrong operation can further be suppressed.

Second game controller 2 may also similarly be used as the mouse with the left hand. First game controller 1 may be operated with the right hand and second game controller 2 may be operated with the left hand. The user may use one of first game controller 1 and second game controller 2 as the mouse and may use the other as the vertically held game controller. Second game controller 2 may be operated with the right hand and first game controller 1 may be operated with the left hand.

### <Modification>

Though the first function is the function to open the menu for communication in the present disclosure, limitation thereto is not intended. The first function may be a function to directly perform a communication function. Alternatively, the first function may be the function to open an album or the function to access an e-shop.

Though the second function is the capture function in the present disclosure, limitation thereto is not intended. The second function may be the function to open the menu for communication. Alternatively, the second function may be the function to open an album or the function to access an e-shop.

Though first menu 710 is the home menu in the present disclosure, limitation thereto is not intended. First menu 710 may be a menu including an item "open home menu."

Though first user-operable input portion 31 to fifth user-operable input portion 35, ninth user-operable input portion 39, + button 110, and - button 210 are operated for control in accordance with a game application running on main body apparatus 3 and sixth user-operable input portion 36 to eighth user-operable input portion 38 are operated to perform a specific function regardless of the game application running on main body apparatus 3 in the present disclosure, limitation as such is not intended. For example, + button 110 and - button 210 may also be operated to perform the specific function.

An announcement or selection of an item may be shown before opening of second menu 720 for communication in the present disclosure. By way of example, an account selection screen to select who will use the communication function may be opened. Performing the first function in the present disclosure means that the first function should only ultimately be performed. The announcement or selection of the item may be shown before the communication function is performed after second menu 720 is opened.

Though system 1000 includes main body apparatus 3, first game controller 1, and second game controller 2 in the present disclosure, limitation as such is not intended. System 1000 may include only first game controller 1 and does not have to include second game controller 2. First game controller 1 and second game controller 2 do not have to be attachable to and removable from main body apparatus 3. Main body apparatus 3 does not have to be portable. For example, main body apparatus 3 may be a server.

The shape of the game controller is not limited to the shape in the present disclosure. For example, the front surface of the game controller may be in a substantially elliptical shape or a semicircular shape. Alternatively, for example, the game controller may be in a shape elongated in the left-right direction. Alternatively, for example, the game controller may include a grip that extends obliquely downward or rearward.

The amount of projection of sixth user-operable input portion 36 from the front surface may be equal to the amount of projection of seventh user-operable input portion 37 from the front surface.

The amount of projection of sixth user-operable input portion 36 from the front surface may be smaller than the amount of projection of seventh user-operable input portion 37 from the front surface.

First user-operable input portion 31 may be located below second user-operable input portion 32.

Second user-operable input portion 32 and sixth user-operable input portion 36 do not have to be located at positions where they are superimposed in the upward-downward direction, and second user-operable input portion 32 and seventh user-operable input portion 37 do not have to be located at positions where they are superimposed in the upward-downward direction.

Sixth user-operable input portion 36 and seventh user-operable input portion 37 may be identical to each other in type of the shape.

The first function does not have to be performed by pressing of seventh user-operable input portion 37 while first menu 710 is shown.

First game controller 1 does not have to include mouse sensor 174.

Eighth user-operable input portion 48 to be operated to perform the second function does not have to be located at the position symmetrical to sixth user-operable input portion 36.

Second game controller 2 may include a user-operable input portion at the position symmetrical to seventh user-operable input portion 37.

Second game controller 2 may include a user-operable input portion to be operated to open first menu 710 or may include a user-operable input portion to be operated to perform the first function.

Sixth user-operable input portion 36 and seventh user-operable input portion 37 may be identical to each other in type of the shape.

Eighth user-operable input portion 48 and seventh user-operable input portion 37 may be different from each other in type of the shape.

The amount of projection of seventh user-operable input portion 37 from the front surface may be equal to the amount of projection of eighth user-operable input portion 48 from the front surface of second game controller 2.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

- 1: first game controller, game controller
- 2: second game controller
- 3: main body apparatus
- 4: left side surface
- 10: controller housing
- 11: first side surface, side surface
- 12: upper surface
- 13: second side surface
- 14: lower surface
- 15: front surface
- 16: rear surface
- 17: housing opening
- 20: controller housing
- 31: first user-operable input portion
- 32: second user-operable input portion
- 33: third user-operable input portion
- 34: fourth user-operable input portion
- 35: fifth user-operable input portion
- 36: sixth user-operable input portion
- 37: seventh user-operable input portion
- 39: ninth user-operable input portion
- 41: first user-operable input portion (left)
- 42: second user-operable input portion (left)
- 43: third user-operable input portion (left)
- 44: fourth user-operable input portion (left)
- 45: fifth user-operable input portion (left)
- 48: eighth user-operable input portion
- 49: ninth user-operable input portion (left)
- 61: front-face-side housing
- 62: rear-surface-side housing
- 71: first synchronization button
- 72: second synchronization button
- 100: projection
- 101: first area
- 102: second area
- 103: third area
- 104: fourth area
- 105: fifth area
- 106: top surface
- 107: outer peripheral surface
- 110: + button
- 150: light emission portion
- 160: first terminal
- 170: first opening
- 174: mouse sensor
- 181: pusher
- 182: operation portion
- 191: first mouse skate member
- 192: second mouse skate member
- 193: first engagement hole
- 194: second engagement hole
- 196: terminal opening
- 200: projection
- 210: - button
- 211: side surface
- 212: upper surface
- 215: front surface
- 250: light emission portion
- 253: third mouse skate member
- 254: fourth mouse skate member
- 260: second terminal
- 270: mouse sensor opening
- 274: mouse sensor
- 282: operation portion
- 301: audio input and output terminal
- 302: upper terminal
- 303: lower terminal
- 304: storage medium slot
- 305: display
- 307: power button
- 313: main body right side surface
- 314: main body left side surface
- 315: main body front surface
- 316: main body upper side surface
- 317: main body lower side surface
- 331: main body first terminal
- 341: main body second terminal
- 400: game controller set
- 701: first item
- 702: second item
- 703: third item
- 704: fourth item
- 705: fifth item
- 706: sixth item
- 707: seventh item
- 710: first menu
- 711: game app selection portion
- 720: second menu
- 1000: system
- F: tracking surface
- P1: first amount of projection
- P2: second amount of projection
- P3: third amount of projection
- R1: first direction
- R2: second direction
- R3: third direction
- R4: fourth direction
- R5: fifth direction
- R6: sixth direction

## Claims

1. A game controller comprising:
a side surface;
an upper surface; and
a front surface, wherein
a first user-operable input portion and a second user-operable input portion are located at the side surface along a longitudinal direction,
a third user-operable input portion is located at the upper surface,
at the front surface,
one set of fourth user-operable input portions,
a fifth user-operable input portion located below the one set of fourth user-operable input portions,
a sixth user-operable input portion located below the fifth user-operable input portion, and
a seventh user-operable input portion located below the sixth user-operable input portion
are located,
the fifth user-operable input portion being configured to be operated to input a direction
the sixth user-operable input portion being configured to be operated to open a first menu, the first menu including a plurality of items including a first item causing a device to perform a first function by being selected,
the seventh user-operable input portion being configured to be operated to perform the first function.

2. The game controller according to claim 1, wherein
an amount of projection of the sixth user-operable input portion from the front surface is different from an amount of projection of the seventh user-operable input portion from the front surface.

3. The game controller according to claim 2, wherein
the amount of projection of the sixth user-operable input portion from the front surface is larger than the amount of projection of the seventh user-operable input portion from the front surface.

4. The game controller according to claim 3, wherein
the first user-operable input portion is located above the second user-operable input portion, and
the second user-operable input portion, the sixth user-operable input portion, and the seventh user-operable input portion are located at positions where the second user-operable input portion and the sixth user-operable input portion are superimposed at least in part in an upward-downward direction, and the second user-operable input portion and the seventh user-operable input portion are superimposed at least in part in the upward-downward direction.

5. The game controller according to any one of claims 1 to 4, wherein
the sixth user-operable input portion and the seventh user-operable input portion are different from each other in type of a shape.

6. The game controller according to any one of claims 1 to 5, wherein
the first function is performed by pressing the seventh user-operable input portion while the first menu is shown.

7. The game controller according to any one of claims 1 to 6, further comprising a mouse sensor at the side surface.

8. A game controller set comprising:
the game controller according to any one of claims 1 to 7; and
a second game controller provided with a second side surface, the second game controller being configured to directly or indirectly be fixed to the game controller such that the second side surface is opposed to the side surface of the game controller, wherein
the second game controller includes an eighth user-operable input portion at a position symmetrical to the sixth user-operable input portion, the eighth user-operable input portion being to be operated to perform a second function, and the second game controller does not include a user-operable input portion at a position symmetrical to the seventh user-operable input portion.

9. The game controller set according to claim 8, wherein
the second game controller does not include a user-operable input portion to be operated for the device to open the first menu and a user-operable input portion to be operated to perform the first function.

10. The game controller set according to claim 8 or 9, wherein
the sixth user-operable input portion and the seventh user-operable input portion are different from each other in type of a shape, and
the eighth user-operable input portion and the seventh user-operable input portion are identical to each other in type of the shape.

11. The game controller set according to any one of claims 8 to 10, wherein
an amount of projection of the seventh user-operable input portion from the front surface is different from an amount of projection of the eighth user-operable input portion from a front surface of the second game controller.

12. The game controller set according to claim 11, wherein
the amount of projection of the seventh user-operable input portion from the front surface is larger than the amount of projection of the eighth user-operable input portion from the front surface of the second game controller.

13. A system comprising:
the game controller according to any one of claims 1 to 7; and
a main body apparatus that communicates with the game controller.

14. A system comprising:
the game controller set according to any one of claims 8 to 12; and
a main body apparatus that communicates with the game controller set.
